# EUROPEAN PATENT SPECIFICATION

(11) **EP 0 721 733 B1**
(45) Date of publication and mention of the grant of the patent: **03.04.2002**
(21) Application number: 95203037.7
(22) Date of filing: 08.11.1995
(51) Int. Cl.: A01K 5/02, A01K 5/00

(54) **A construction for displacing feed**
Futterverteilungseinrichtung
Dispositif pour le déplacement de fourrage

(30) Priority: 11.01.1995 NL 9500050
(43) Date of publication of application: 17.07.1996
(73) Proprietor: MAASLAND N.V., 3155 PD Maasland (NL)
(72) Inventor: van der Lely, Cornelis, CH-6300 Zug (CH)
(74) Representative: Corten, Maurice Jean F.M.

(56) References cited:
- EP-A- 0 043 098
- WO-A-88/09119
- CH-A- 677 171
- DE-A- 2 639 423
- DE-A- 3 127 718
- DE-A- 3 438 612
- DE-A- 3 510 401
- DE-A- 4 316 397
- PATENT ABSTRACTS OF JAPAN vol. 1, no. 1 & JP 57 062422 A (SHINKO ELECTRIC CO), 1 October 1982,

## Description

The present invention relates to a system for feeding animals as defined in the preamble of claim 1.

Such systems are known, for example from DE-A1-43 16 397. These known constructions have the disadvantage of requiring a large quantity of manual work.

It is the object of the present invention to provide relief and/or improvement in this connection.

According to the invention this is achieved by the features as specified in the characterizing part of claim 1.

From DE-A-34 38 612 a feeding system which functions automatically is known per se. Batteries drive the feed-displacing implement. However, the feed-displacing implement is not automatically moved to a connection with an electric power supply for recharging the batteries.

Preferred embodiments of the inventive system are disclosed in the sub claims.

For a better understanding of the present invention and to show how the same may be carried into effect, reference will now be made, by way of example, to the accompanying drawings, in which:
Figure 1 shows, in a schematic plan view, an implement according to the invention;
Figure 2 shows, in a side view, an automatically operating displacing implement according to the invention;
Figure 3 is a plan view of Figure 2, and
Figure 4 shows, in a schematic plan view, a part of the implement, the displacing implement being connected to an electricity supply.

In the drawings, corresponding parts have been indicated by the same reference numerals. Furthermore, the invention is by no means restricted to the embodiment shown and described here; it only serves to illustrate the inventive idea.

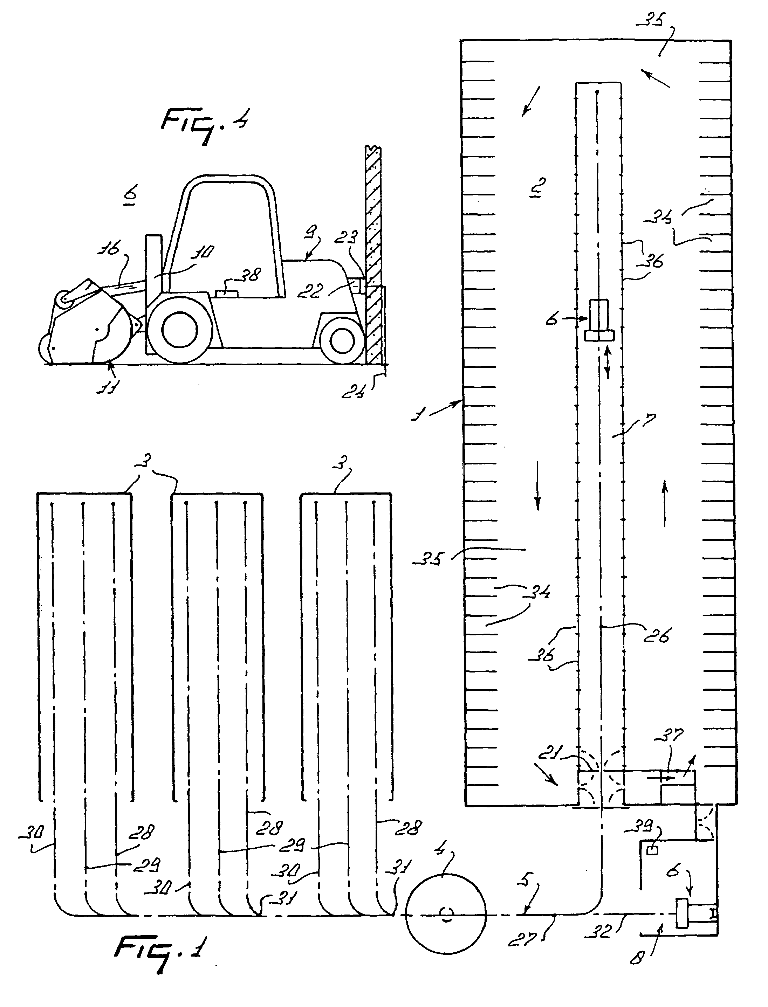

Figure 1 shows in a schematic plan view a construction including an accommodation for animals, such a dairy cows. The construction comprises a stable or cowshed 1 including an animal accommodation 2, a milking robot 37 and furthermore three slot silos 3 arranged parallel to the longitudinal direction of the cowshed 1, an upright concentrate silo 4, guide elements 5 in the form of electromagnetic cables fitted in a floor, an automatically operating implement 6 designed as a feeding robot, and a maintenance building 8. The cowshed 1 comprises, in its centre, a feed alley 7 which extends in the longitudinal direction and ends at some distance from its rear wall, thereby providing a permanent rear cow passage extending transversely to the feed alley. In the feed alley 7 near the front of the cowshed 1, there is provided an automatically controlled fencing 21 which, in a first position, releases a cow passage extending transversely to the feed alley 7 and, in a second position, closes same off. The latter position releases a passage in the longitudinal direction of the feed alley, e.g. for the feeding robot 6. The cowshed 1 includes a walking part 35 and cubicles 34 for the animals. The walking part 35 is adjacent to the feed alley 7 by means of a fencing including feeding places 36, where the cows can take feed individually. The feeding places 36 may comprise cow identification means, such as transponders, which are connected with a central computer 39 for the accomodation and for the feeding robot 6.

In the longitudinal centre of the feed alley 7 there is provided a part 26 of the guide cable 5 extending to outside the cowshed 1. This part 26 passes by means of a bend into a guide part 27 extending transversely to the longitudinal direction of the cowshed 1 and leading under a concentrate silo 4 to three bulkage silos 3. Beyond the bulkage silo 4, the guide part 27 is provided near each soilage silo 3 with a number of switches 31, in the present embodiment three, which release one of a number of branches 28, 29, 30 of the guide element 5, which branches are arranged side by side in the longitudinal direction of the slot silos 3.

The guide element 5 furthermore comprises a guide part 32 which is in alignment with the part 27, but, relative to the concentrate silo 4, extends in the opposite direction and leads to inside the maintenance building 8. At the end of the guide part 32 inside the maintenance building 8 there is provided a contact element 23. The contact element 23 may be engaged to a contact element 22 on the feeding robot 6; it is connected to an electric power supply 24, in the present embodiment constituted by the electricity grid.

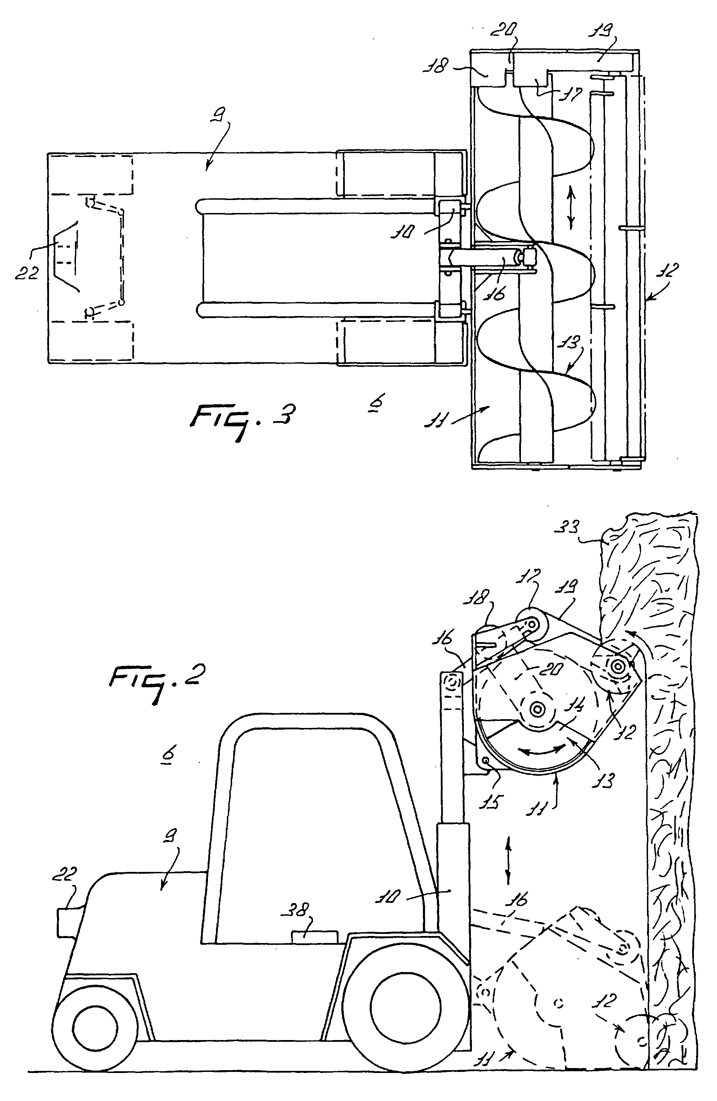

Figure 2 shows the feeding robot 6. In the present embodiment, the feeding robot 6 comprises a fork-lift truck 9 or at least the main parts thereof. This fork-lift truck comprises, for its drive, batteries and an electric motor and is adapted in such a way, inter alia by means of an onboard computer 38, that it is capable of automatically being controlled and automatically being moved in both directions along the guide cable 5. The feeding robot 6 comprises sensors for establishing the way covered and for detecting the sharp bends made, with the aid of the wheel revolutions. On the basis of the way covered and a starting point once inputted in the onboard computer 38, the feeding robot 6 constantly establishes its position inside the construction, i.e. the whole of the cowshed 1, the feed silos 3, 4 and a pertinent driving path including a guide cable 5. The bends, such as those provided between the parts 26 and 27 of the guide cable and at the switches 31, constitute the calibration points for the feeding robot 6 upon calculating the way covered.

The fork-lift truck 9 comprises a telescopic lever 10, to which a loading shovel including a storage box 11 is pivotably connected about a pivot shaft 15 being arranged transversely to the driving direction of the fork-lift truck 9. The connection with the lever 10 comprises an automatically operable adjusting element 16, which is capable of being adjusted in its longitudinal direction and is arranged at some distance from the pivot shaft 15. At the front side of the storage box 11, the loading shovel comprises a drivable loading member 12, here designed as a cutting member. The loading member 12 is driven by means of a motor 17 that is capable of being automatically controlled, i.e. by the onboard computer 38, and a transmission element 19, such as a chain. Inside the storage box 11, there is provided a mixing and discharging auger 13 which is capable of being driven by means of a motor 18 and a drive element 20. This auger is drivable in a way corresponding to that of the loading member. For the discharging of the feed, the storage box 11 includes on both sides an opening 14, through which the feed loaded therein is discharged by the rotation of the auger 13. In a non-shown embodiment, the storage box 11 comprises here an automatically controllable slide which is capable of releasing the outlet opening 14 for the passage of the feed. Both the loading member 12 and the mixing and discharging auger 13 are bearing-mounted in the longitudinal direction of the storage box 11, i.e. transversely to the driving direction of the fork-lift truck.

The operation of the machine will be further explained in what follows.

By way of example, eighty cows can be milked two to four times a day in the cowshed 1 of the implement by means of the milking robot 37. The feeding robot 6 feeds the animals a number of times a day, e.g. four times; the number of feedings may be more or less, and the feedings are preferably effected at fixed moments.

The feeding robot 6 drives backwards into the feed alley 7 and leaves it forwards, so that the fork-lift truck 9 moves to the silage 33 in the slot silo 3 with the storage box 11 situated at the front side. The cutting device 12 is put into operation as soon as the feeding robot 6 has ascertained that it has entered a bulkage silo 3, i.e. has passed a switch, and as soon as a sensor provided thereon for the purpose has ascertained that the loading member is in contact with the silage 33. When silage 33 is loaded into the storage box 11, the latter moves from the bottom to the top, substantially vertically, along the silage 33, while the cutting device 12 turns at its upper end towards the storage box 11. At the same time, insofar as necessary, the adjusting element 16 is automatically withdrawn, so that the storage box 11 turns over backwardly about the pivot shaft 15 and the silage can be loaded in an advantageous manner, while the fork-lift truck 9 automatically moves slightly into the direction of the soilage in the silo. After the loading of feed from the slot silo, the feeding robot 6 leaves same while passing under or along the concentrate silo 4, where concentrate or other feed is automatically loaded and mixed with the bulkage.

At regular intervals or, in the case that the feeding takes place at fixed moments, after the feeding, the feeding robot 6 interrupts its activities and moves, after having left the guide part 27, through a switch to the maintenance building 8 for a recharge of the batteries of the fork-lift truck 9. When moving along the guide part 32, the contact element 22 of the fork-lift truck 9 automatically comes into contact with the contact element 23 in the maintenance building 8, the feeding robot 6 is automatically stopped and the batteries are recharged. In a preferred embodiment, every evening after the last feeding run, the robot 6 goes to the maintenance building for an automatic recharge. In the morning, the robot 6 is automatically disconnected from the power point.

The feeding robot 6 handles in principle small portions of soilage or bulkage and concentrate, i.e. a sufficient quantity for one to three cows. However, larger portions, i.e. for five to ten cows, can be displaced as well. The feeding robot 6 is capable of unloading the feed in the feed alley 7 alternately at its left side and at its right side. By means of the cow identification means and the central computer 37, the feeding robot 6 can be directed to any feeding place 36 where a cow has reported for the dosage of feed according to quantity and composition dependent on the relative cow. The feeding robot 6 comprises sensors of an automatic weighing system controlled by the onboard computer 38 and provided in the connection of the storage box, thereby enabling the unloading of a specific quantity of feed. In an alternative embodiment, the onboard computer supplies a controlled signal for a specific number of revolutions of the auger 13, which also results in the dosage of a measured quantity of feed. When the feeding robot 6 leaves the guide cable 5 for some reason or other, it is immediately stopped due to the cutting off of the contact, which increases the security of the feeding system.

The invention is not restricted to the aforementioned description or the method pertaining thereto, but also relates to all the details of the drawings. The invention furthermore relates to all sorts of alternatives in the construction and in the method, of course, falling within the scope of the following claims.

## Claims

1. System for feeding animals, said system comprising one or more silos (3, 4) for the storage of feed, an accommodation (2) for animals, said accommodation (2) having feeding places (36), a feed-displacing implement (6) for displacing feed from a silo (3, 4) to a feeding place (36), and guide means (5, 26, 27, 32) for guiding the feed-displacing implement (6), **characterized in that** said feed-displacing implement (6) is an automatically operating feed-displacing implement (6) driven by batteries, **in that** the system comprises a connection (23) with an electric power supply (24) for recharging the batteries, and **in that** said feed-displacing implement (6) is capable of being moved automatically to the connection (23) with the electric power supply (24) for recharging the batteries.

2. System as claimed in claim 1, **characterized in that** the guide means are electromagnetic guide means (5, 26, 27, 32) fitted in or near the floor of the accommodation (2).

3. System as claimed in claim 1 or 2, **characterized in that** the connection (23) is provided near the end of a guide means (32).

4. System as claimed in any one of the preceding claims, **characterized in that** the guide means (5, 26, 27, 32) serves for controlling the feed-displacing implement (6).

5. System as claimed in any one of the preceding claims, **characterized in that** the guide means (5, 26, 27, 32) extends both inside and outside the accommodation.

6. System as claimed in any one of the preceding claims, **characterized in that** the power supply (24) is constituted by electricity grid.

7. System as claimed in any one of the preceding claims, **characterized in that** the feed-displacing implement (6) includes an automatically operating loading shovel (11).

8. System as claimed in any one of the preceding claims, **characterized in that** the feed-displacing implement (6) is a robot (6) capable of being displaced automatically.

9. System as claimed in claim 8, **characterized in that** the robot (6) is disconnected automatically after the batteries have been recharged.

10. System as claimed in any one of the preceding claims, **characterized in that** the system comprises an animal identification system.

11. System as claimed in claim 10, **characterized in that** the volume of feeding is dependent on the relative animal.

12. System as claimed in claim 8, **characterized in that** the robot (6) is suitable for automatically mixing two or more types of feed.

13. System as claimed in claim 8 or 12, **characterized in that** the robot (6) is based on a fork-lift truck (9).

14. System as claimed in claim 13, **characterized in that** the robot (6) comprises construction elements for the fork-lift truck (9), enabling its automatic control.

15. System as claimed in claim 12 or 13, **characterized in that** a storage box (11) is arranged so as to be hydraulically adjustable on the lever (10) of the fork-lift truck (9).

16. System as claimed in claim 15, **characterized in that** the storage box (11) comprises a screw conveyor (13) capable of discharging feed optionally to the left or to the right relative to the driving direction.

17. System as claimed in claim 15 or 16, **characterized in that** the lever (10) provided on the fork-lift truck (9) supports the storage box (11).

18. System as claimed in any one of the preceding claims, **characterized in that** the feed-displacing implement (6) comprises a contact element (22) for connecting the feed-displacing implement (6) to the power supply (24).

19. System as claimed in any one of the preceding claims, **characterized in that** the accommodation (2) for the animals is a loose house.

20. System as claimed in any one of the preceding claims, **characterized in that** the system comprises a cow shed (1), and that there is provided a guide means (26) in the centre thereof.

21. System as claimed in any one of the preceding claims, **characterized in that** the accommodation (2) comprises a milking robot (37).

## Patentansprüche

1. Anlage zum Füttern von Tieren, wobei die Anlage einen oder mehrere Silos (3, 4) zur Aufnahme von Futter, eine mit Futterplätzen (36) versehene Unterkunft (2) für Tiere, eine Futterbeförderungsvorrichtung (6) zum Befördern von Futter von einem Silo (3, 4) zu einem Futterplatz (36) sowie eine Leitvorrichtung (5, 26, 27, 32) zum Leiten der Futterbeförderungsvorrichtung (6) umfaßt,
**dadurch gekennzeichnet, daß** die Futterbeförderungsvorrichtung (6) eine akkubetriebene, automatisch arbeitende Futterbeförderungsvorrichtung (6) ist, daß die Anlage eine Anschlußstelle (23) mit einer Stromversorgung (24) zum Wiederaufladen der Akkus umfaßt, und daß die Futterbeförderungsvorrichtung (6) zum Wiederaufladen der Akkus automatisch zu der Anschlußstelle (23) mit der Stromversorgung (24) bewegt werden kann.

2. Anlage nach Anspruch 1,
**dadurch gekennzeichnet, daß** die Leitvorrichtung durch eine elektromagnetische Leitvorrichtung (5, 26, 27, 32) gebildet ist, die in oder nahe dem Boden der Unterkunft (2) angebracht ist.

3. Anlage nach Anspruch 1 oder 2,
**dadurch gekennzeichnet, daß** die Anschlußstelle (23) nahe dem Ende einer Leitvorrichtung (32) angeordnet ist.

4. Anlage nach einem der vorhergehenden Ansprüche,
**dadurch gekennzeichnet, daß** die Leitvorrichtung (5, 26, 27, 32) zum Steuern der Futterbeförderungsvorrichtung (6) dient.

5. Anlage nach einem der vorhergehenden Ansprüche,
**dadurch gekennzeichnet, daß** sich die Leitvorrichtung (5, 26, 27, 32) sowohl innerhalb als auch außerhalb der Unterkunft erstreckt.

6. Anlage nach einem der vorhergehenden Ansprüche,
**dadurch gekennzeichnet, daß** die Stromquelle (24) durch das Stromversorgungsnetz gebildet ist.

7. Anlage nach einem der vorhergehenden Ansprüche,
**dadurch gekennzeichnet, daß** die Futterbeförderungsvorrichtung (6) eine automatisch arbeitende Ladeschaufel (11) enthält.

8. Anlage nach einem der vorhergehenden Ansprüche,
**dadurch gekennzeichnet, daß** die Futterbeförderungsvorrichtung (6) ein Roboter (6) ist, der automatisch verfahrbar ist.

9. Anlage nach Anspruch 8,
**dadurch gekennzeichnet, daß** der Roboter (6) nach Wiederaufladen der Akkus automatisch entkoppelt wird.

10. Anlage nach einem der vorhergehenden Ansprüche,
**dadurch gekennzeichnet, daß** die Anlage ein Tieridentifikationssystem umfaßt.

11. Anlage nach Anspruch 10,
**dadurch gekennzeichnet, daß** die Futtermenge von dem jeweiligen Tier abhängt.

12. Anlage nach Anspruch 8,
**dadurch gekennzeichnet, daß** der Roboter (6) geeignet ist, zwei oder mehrere Arten von Futter automatisch zu mischen.

13. Anlage nach Anspruch 8 oder 12,
**dadurch gekennzeichnet, daß** der Roboter (6) auf einem Gabelstapler (9) basiert.

14. Anlage nach Anspruch 13,
**dadurch gekennzeichnet, daß** der Roboter (6) Bauelemente für den Gabelstapler (9) umfaßt, die seine automatische Steuerung ermöglichen.

15. Anlage nach Anspruch 12 oder 13,
**dadurch gekennzeichnet, daß** ein Aufnahmebehälter (11) derart angeordnet ist, daß er an dem Träger (10) des Gabelstaplers (9) hydraulisch verstellbar ist.

16. Anlage nach Anspruch 15,
**dadurch gekennzeichnet, daß** der Aufnahmebehälter (11) eine Förderschnecke (13) umfaßt, von der Futter wahlweise nach links oder nach rechts in Abhängigkeit von der Bewegungsrichtung abzuladen ist.

17. Anlage nach Anspruch 15 oder 16,
**dadurch gekennzeichnet, daß** der an dem Gabelstapler (9) vorhandene Träger (10) den Aufnahmebehälter (11) abstützt.

18. Anlage nach einem der vorhergehenden Ansprüche,
**dadurch gekennzeichnet, daß** die Futterbeförderungsvorrichtung (6) ein Kontaktelement (22) zum Anschließen der Futterbeförderungsvorrichtung (6) an die Stromversorgung (24) umfaßt.

19. Anlage nach einem der vorhergehenden Ansprüche,
**dadurch gekennzeichnet, daß** die Unterkunft (2) für die Tiere ein Laufstall ist.

20. Anlage nach einem der vorhergehenden Ansprüche,
**dadurch gekennzeichnet, daß** die Anlage einen Kuhstall (1) umfaßt, und daß in der Mitte desselben eine Leitvorrichtung (26) angeordnet ist.

21. Anlage nach einem der vorhergehenden Ansprüche,
**dadurch gekennzeichnet, daß** die Unterkunft (2) einen Melkroboter (37) umfaßt.

## Revendications

1. Système pour alimenter les animaux, ledit système comprenant un ou plusieurs silos (3, 4) pour le stockage du fourrage, un abri (2) pour les animaux, ledit abri (2) comportant des espaces d'alimentation (36), un outil de déplacement de fourrage (6) pour déplacer le fourrage depuis un silo (3, 4) vers un espace d'alimentation (36), et des moyens de guidage (5, 26, 27, 32) pour guider l'outil de déplacement de fourrage (6), **caractérisé en ce que** ledit outil de déplacement de fourrage (6) est un outil de déplacement de fourrage à fonctionnement automatique (6) entraîné par des batteries, **en ce que** le système comprend un raccordement (23) avec une alimentation en puissance électrique (24) pour recharger les batteries, et **en ce que** ledit outil de déplacement de fourrage (6) est capable d'être déplacé automatiquement vers le raccordement (23) avec l'alimentation en puissance électrique (24) pour recharger les batteries.

2. Système selon la revendication 1, **caractérisé en ce que** les moyens de guidage sont des moyens de guidage électromagnétiques (5, 26, 27, 32) ajustés dans le ou près du sol de l'abri (2).

3. Système selon la revendication 1 ou 2, **caractérisé en ce que** le raccordement (23) est prévu à proximité de l'extrémité de moyens de guidage (32).

4. Système selon l'une quelconque des revendications précédentes, **caractérisé en ce que** les moyens de guidage (5, 26, 27, 32) servent à commander l'outil de déplacement de fourrage (6).

5. Système selon l'une quelconque des revendications précédentes, **caractérisé en ce que** les moyens de guidage (5, 26, 27, 32) s'étendent à la fois à l'intérieur et à l'extérieur de l'abri.

6. Système selon l'une quelconque des revendications précédentes, **caractérisé en ce que** l'alimentation en puissance (24) est constituée par une grille électrique.

7. Système selon l'une quelconque des revendications précédentes, **caractérisé en ce que** l'outil de déplacement de fourrage (6) comprend une pelle de chargement à fonctionnement automatique (11).

8. Système selon l'une quelconque des revendications précédentes, **caractérisé en ce que** l'outil de déplacement de fourrage (6) est un robot (6) capable d'être déplacé automatiquement.

9. Système selon la revendication 8, **caractérisé en ce que** le robot (6) est automatiquement déconnecté après le rechargement des batteries.

10. Système selon l'une quelconque des revendications précédentes, **caractérisé en ce que** le système comprend un système d'identification des animaux.

11. Système selon la revendication 10, **caractérisé en ce que** le volume de fourrage est fonction de l'animal correspondant.

12. Système selon la revendication 8, **caractérisé en ce que** le robot (6) est adapté pour mélanger automatiquement deux types de fourrage ou plus.

13. Système selon la revendication 8 ou 12, **caractérisé en ce que** le robot (6) est basé sur un chariot élévateur (9).

14. Système selon la revendication 13, **caractérisé en ce que** le robot (6) comprend des éléments de construction pour le chariot élévateur (9), permettant sa commande automatique.

15. Système selon la revendication 12 ou 13, **caractérisé en ce qu'**une boîte de stockage (11) est agencée de façon à pouvoir être réglée hydrauliquement sur le levier (10) du chariot élévateur (9).

16. Système selon la revendication 15, **caractérisé en ce que** la boîte de stockage (11) comprend un transporteur à vis (13) capable de décharger le fourrage éventuellement vers la gauche ou vers la droite par rapport à la direction d'entraînement.

17. Système selon la revendication 15 ou 16, **caractérisé en ce que** le levier (10) prévu sur le chariot élévateur (9) supporte la boîte de stockage (11).

18. Système selon l'une quelconque des revendications précédentes, **caractérisé en ce que** l'outil de déplacement de fourrage (6) comprend un élément de contact (22) pour raccorder l'outil de déplacement de fourrage (6) à l'alimentation en puissance (24).

19. Système selon l'une quelconque des revendications précédentes, **caractérisé en ce que** l'abri (2) destiné aux animaux est une stalle.

20. Système selon l'une quelconque des revendications précédentes, **caractérisé en ce que** le système comprend une étable (1) et **en ce qu'**il est prévu des moyens de guidage (26) au centre de celle-ci.

21. Système selon l'une quelconque des revendications précédentes, **caractérisé en ce que** l'abri (2) comprend un robot trayeur (37).
